(19) Europäisches Patentamt
European Patent Office
Office européen des brevets

(11) **EP 2 823 263 B1**

(12) **EUROPÄISCHE PATENTSCHRIFT**

(45) Veröffentlichungstag und Bekanntmachung des Hinweises auf die Patenterteilung:
**05.07.2017   Patentblatt 2017/27**

(51) Int Cl.:
**G01D 5/347** (2006.01)

(21) Anmeldenummer: **13709389.4**

(86) Internationale Anmeldenummer:
**PCT/EP2013/054480**

(22) Anmeldetag: **06.03.2013**

(87) Internationale Veröffentlichungsnummer:
**WO 2013/131945 (12.09.2013 Gazette 2013/37)**

(54) **OPTOELEKTRONISCHE LAGEMESSVORRICHTUNG**

OPTOELECTRONIC POSITIONING DEVICE

DISPOSITIF DE MESURE DE POSITION OPTOÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2012   EP 12158745**

(43) Veröffentlichungstag der Anmeldung:
**14.01.2015   Patentblatt 2015/03**

(73) Patentinhaber: **Hexagon Technology Center GmbH**
**9435 Heerbrugg (CH)**

(72) Erfinder:
• **VOKINGER, Urs**
**CH-9434 Au (CH)**
• **AMANN, Werner**
**A-6800 Feldkirch (AT)**

(74) Vertreter: **Kaminski Harmann Patentanwälte AG**
**Landstrasse 124**
**9490 Vaduz (LI)**

(56) Entgegenhaltungen:
WO-A1-2010/072498    DE-A1- 3 116 440
DE-A1- 19 854 733    DE-A1-102006 024 179
US-A- 4 319 134    US-A- 4 536 650
US-A1- 2004 173 737

**Beschreibung**

Die Erfindung betrifft eine optoelektronische Lagemessvorrichtung zum Bestimmen von Richtungen, Winkeln und/oder Längen mittels einer Beleuchtungseinrichtung, eines Codeelementes und eines Detektors.

Das Bestimmen von Richtungen, Winkeln und Längen als Lagen ist in vielen Anwendungsbereichen gefordert, wie beispielsweise in der geodätischen und industriellen Vermessung. Entwicklungen in der Winkelmesstechnik führten über mechanische Ablesevorgänge bis zur vollautomatisierten Winkelmessung nach dem heutigen Stand der Technik.

Bekannte automatisierte Lagemessvorrichtungen umfassen im Allgemeinen einen Codeträger und eine Abtasteinrichtung. Bei Winkelmesseinrichtungen ist der Codeträger üblicherweise relativ zur Abtasteinrichtung um eine Achse drehbar ausgebildet, wobei dann eine Winkellage des Codeträgers die zu messende Grösse darstellt. Der Codeträger kann zum Beispiel eine Teilung oder Codierung zur Positionsbestimmung aufweisen, wobei die Codierung auf einer Oberfläche oder Mantelfläche des Codeträgers aufgebracht sein kann.

Zur automatischen Erfassung der Lage wird der relativ zur Abtasteinrichtung bewegbare Codeträger mittels unterschiedlicher Techniken abgetastet. Zu den bekannten Abtastverfahren gehören elektronisch-magnetische, elektronische und optisch-elektronische Verfahren. Die folgenden Ausführungen beziehen sich auf optisch-elektronische Abtastverfahren und Abtasteinrichtungen, die insbesondere eine Beleuchtungseinrichtung und einen entsprechenden Detektor aufweisen.

Übliche optoelektronische Winkelsensoren zum Bestimmen eines Drehwinkels um eine Achse weisen einen Codeträger und einen optischen Detektor auf, die relativ zueinander drehbar sind. Der optische Detektor ist beispielsweise ein Photodetektor, ein CCD-Zeilen-Array oder ein CCD-Flächen-Array. Der Codeträger ist im Allgemeinen als Kreisscheibe oder als Kreisring ausgebildet und trägt entlang seines Umfangs einen optisch erfassbaren Positionscode, von dem ein Ausschnitt durch eine Beleuchtungseinrichtung auf den Detektor abgebildet wird. Im Allgemeinen dreht sich dabei der Codeträger des Winkelsensors. Es ist jedoch ebenso möglich, den Codeträger feststehend und den Detektor drehend auszubilden.

Zur Bestimmung beispielsweise von Winkelstellungen von 0° bis 360° ist die Codierung üblicherweise in einem Vollkreis angeordnet. Die Winkelauflösung des Vollkreises bestimmt sich nach Art der Codierung und nach der zum Lesen der Codierung eingesetzten Abtasteinrichtung. So wird beispielsweise durch Aufbringen eines Codes in mehreren Spuren oder durch eine feinere Teilung die Winkelauflösung gesteigert, wobei die erreichbare Auflösung aus fertigungs- und kostentechnischen Gründen beschränkt ist. Zum Lesen des Codes sind z.B. Anordnungen von einem oder mehreren Detektoren bekannt. CCD-Zeilen-Arrays oder CCD-Flächen-Arrays können beispielsweise solche Detektoren darstellen. Die Ausbildung des Codes kann durch Strukturierung einer reflektierenden Oberfläche oder auch eines durchleuchtbaren Materials erfolgen, so dass die Abbildung in Transmission, Reflexion oder in einem kombinierten Verfahren erfolgt.

Die schweizerische Patentschrift CH 658514 A5 offenbart eine solche Vorrichtung zum Messen einer Winkellage. Dabei wird eine Marke, deren Lage in Bezug auf eine Fläche von Sensoren die zu messende Grösse darstellt, auf diese Fläche abgebildet. Die Ausgangssignale der Sensoren werden in eine Auswerteschaltung geführt, die die Verteilung der Intensität der durch die Sensoren erzeugten Signale sequentiell ermittelt. Aus der Intensitätsverteilung kann die Lage der Marke in Bezug auf die Fläche von Sensoren abgeleitet werden. Die Patentschrift US2004173737 offenbart einen weiteren optischen Encoder. Die Abmessungen einer Lagemessvorrichtung für geodätische Geräte sind vorteilhaft gering zu halten. Um eine entsprechend kleine und wenig aufwendige Bauweise zu erlauben, werden seit einiger Zeit die Beleuchtungseinrichtung und der Detektor der Lagemessvorrichtung auf einer gemeinsamen elektrisch versorgten Platine angeordnet, und nicht wie zuvor ober- und unterhalb eines Codeträgers jeweils auf einer separaten elektrisch versorgten Platine. Bei Lagemessvorrichtungen des Standes der Technik mit einer nebeneinander liegenden Anordnung des Detektors und der Beleuchtungseinrichtung werden die emittierten Strahlen beispielsweise durch ein Umlenkelement mit zwei planen, reflektierenden Flächen so umgelenkt, dass eine Abbildung des Codes durch den im Strahlgang nachgeordneten Codeträger auf dem Detektor erzeugt wird. Optional können dabei die emittierten Strahlen mittels einer der Beleuchtungsquelle direkt nachgeordneten Optik kollimiert werden.

Da ein Codeträger möglichst nahe über den Detektor geführt werden sollte, ist eine möglichst ebene und glatte Oberfläche eine wesentliche mechanische Voraussetzung. Zudem muss eine hochgenaue laterale Positionierung von Quelle und Empfänger erfolgen.

Durch Fertigungstoleranzen die Positionierung der Chips in den Komponentengehäusen signifikant streuen, sodass durch die Positionierung der Gesamtkomponente keine exakte Lage der Chips selbst zu gewährleisten ist. Diese Problematik betrifft insbesondere die Strahlungsquelle.

Die Strahlungsquelle und den Detektor nebeneinander auf derselben Platte zu plazieren, ermöglicht eine Justierung von Sensor und Quelle mit Hilfe eines Mikroskops. Im Regelfall weisen beide Komponenten unterschiedliche Bauhöhen auf. So weist normalerweise die Strahlungsquelle eine grössere Tiefe auf als das Erfassungselement.

Es ist daher eine Aufgabe der vorliegenden Erfindung, eine verbesserte optoelektronische Lagemessvorrichtung mit kompakteren Ausmassen bereitzustellen.

Eine besondere Aufgabe der vorliegenden Erfindung ist es, eine optoelektronische Lagemessvorrichtung mit einem verringerten Abstand zwischen einem Codeträger und einer eine Strahlungsquelle und ein Erfassungselement aufweisenden Trägerplatte bereitzustellen.

Eine weitere Aufgabe der vorliegenden Erfindung ist es, eine optoelektronische Lagemessvorrichtung mit einer genaueren Positionierung der Strahlungsquelle und des Erfassungselementes bereitzustellen.

Mindestens eine dieser Aufgaben wird in erfindungsgemässer Weise durch die optoelektronische Lagemessvorrichtung mit den Merkmalen des Anspruchs 1 und/oder der weiteren Ansprüche gelöst. Vorteilhafte Ausgestaltungen der Erfindung finden sich in den abhängigen Ansprüchen.

Eine erfindungsgemässe optoelektronische Lagemessvorrichtung weist einen Codeträger mit einem Positionscode und ein Trägerelement, insbesondere eine Leiterplatte, mit einer Strahlungsquelle, insbesondere einer LED oder einer Laserdiode, und einem Erfassungselement, insbesondere einem Sensorarray oder einem CCD-Chip, auf. Dabei sind die Strahlungsquelle und/oder das Erfassungselement in dem Trägerelement erfindungsgemäss ganz oder teilweise versenkt angeordnet, sodass sie entweder gar nicht oder - verglichen mit einer bekannten aufgesetzten Anordnung - nur in einem verringerten Umfang über eine durch die der Codescheibe zugewandte Vorderseite des Trägerelementes definierte Ebene herausragen. Dabei wird wenigstens die höhere der beiden Komponenten Strahlungsquelle und Erfassungselement - im Regelfall die Strahlungsquelle - ganz oder teilweise in das Trägerelement versenkt.

Durch einen nackten Verbau der Chips ohne Gehäuse kann dabei vorteilhaft eine hochpräzise Justierung erfolgen, die zur Realisierung geringer Abstände erforderlich ist. Insbesondere ist auch eine abdeckglaslose Ausführung vorteilhaft realisierbar. Ebenso können die optischen Elemente mit einer Kupferschicht versehen sein, sodass sie wie elektronische Komponenten auf Leiterbahnen oder Lötaugen des Trägerelementes aufgelötet werden können.

Vorzugsweise wird die Strahlungsquelle vollständig in dem Trägerelement versenkt. Hierdurch wird zusätzlich die Definition der mechanischen Oberfläche durch den Detektor gewährleistet.

In einer vorteilhaften Ausführungsform ist eine Leiterplatte als Trägerelement hierzu an der der Codescheibe abgewandten Seite mit einem Sackloch versehen, in das eine LED oder eine Laserdiode - mit oder ohne Gehäuse - als Strahlungsquelle eingeführt ist. An der vorderen Seite der Leiterplatte kann eine Öffnung als Blende gestaltet werden. Insbesondere kann der verbleibende Materialteil zwischen dem Sackloch und der der Codescheibe zugewandten Seite der Leiterplatte durchbohrt sein, wodurch eine Blendenwirkung erzielt wird. Ist der Materialteil, in der diese Öffnung liegt, zu dünn und daher durchscheinend, so kann sie - zum Beispiel mittels einer Kupferschicht, ähnlich einem Lötpunkt - opak gemacht werden.

In einer weiteren vorteilhaften Ausführungsform ist eine Vertiefung auf der dem Codeträger zugewandten Seite in die Leiterplatte eingebracht, in welcher die Strahlungsquelle eingebracht und - insbesondere als "nackter" Chip ohne Gehäuse - genau positioniert werden kann.

Vorzugsweise ist auch ein Detektor als Erfassungselement versenkt angeordnet, insbesondere in einer auf der dem Codeträger zugewandten Seite der Leiterplatte eingebrachten Vertiefung, sodass an der dem Codeträger zugewandten Seite der Leiterplatte eine plane Ebene entsteht, über welcher der Codeträger bewegt wird.

Sind auf der Leiterplatte ausser der Strahlungsquelle und dem Erfassungselement weitere Elemente unterzubringen, deren oberflächige Anordnung eine Annäherung des Codeelementes behindern, so können selbstverständlich auch diese ganz oder teilweise versenkt angeordnet werden.

Vorzugsweise sind die versenkt angeordneten Elemente in der Vertiefung durch Verbindungskontaktlöcher ("Viaholes") zur Rückseite des Trägerelementes elektrisch kontaktiert und mit optischem Kleber vergossen. Insbesondere können in den optischen Kleber auch Blenden- oder Linsenstrukturen integriert sein. Insbesondere wenn das Trägerelement aus mehreren Schichten Leiterplatten zusammengesetzt ist, kann alternativ auch eine Kontaktierung über Leiterbahnen einer dieser Leiterplatten erfolgen.

Wird das Element auf der dem Codeträger zugewandten Seite versenkt, so kann die Vertiefung zum Schutz der Anschlüsse mit einem optischen Kleber aufgefüllt werden. Optional kann die Oberfläche des Füllklebers zu einer optischen diffraktiven oder refraktiven Oberfläche geformt werden. Es kann alternativ auch nach dem Auffüllen mit optischem Kleber ein Abpolieren der Oberfläche des Trägerelementes erfolgen, so dass unter Einschluss der verfüllten Vertiefung eine definierte glatte mechanische Oberfläche entsteht.

Ein Auffüllen der Vertiefung ist aber nicht unbedingt notwendig. Insbesondere in dem Fall, dass die Stirnseite des versenkten Bauelementes, beispielsweise eines CCD-Chips, mit der Vorderseite des Trägerelementes zusammenfällt, kann auf einen Füllkleber auch ganz verzichtet werden. Auch können optische Bauteile wie Linsen in die Versenkung eingebracht werden, die - beispielsweise über einen Klick-Mechanismus - in der Leiterplatte oder am versenkten Bauelement selbst befestigt werden, und die Vertiefung komplett abdecken können. Insbesondere kann diese Abdeckung auch gemeinsam mit der Vorderseite der Leiterplatte eine im wesentlichen ebene Oberfläche bilden.

Eine Leiterplatte zur Versenkung der Komponenten kann vorteilhaft aus mehreren Schichten bestehen, die insbesondere zusammengeklebt werden. Die Vertiefungen und Öffnungen werden vor oder nach dem Zusammenkleben geschaffen, insbesondere durch Ausfräsen. Da beim oder nach dem Zusammenkleben der Schichten überschüssiger Klebstoff durch den Pressdruck in die Vertiefungen fliessen könnte, sind in den Vertiefungen vorzugsweise Kleberfallen vorgesehen, in die dieser Klebstoff hineinrinnen kann, wodurch die Grundfläche der Vertiefung frei von Klebstoff bleibt.

Als Vorderseite des Trägerelementes wird die Seite des Trägerelementes angesehen, die dem Codeträger zugewandt ist - vorzugsweise ist dies eine ebene Fläche.

Der Codeträger kann gemäss sämtlichen nach dem Stand der Technik bekannten Formen und aus dem Fachmann bekannten Materialien, wie zum Beispiel Kunststoff, ausgebildet sein. Insbesondere weist er eine Form mit kreisförmigem Querschnitt auf, beispielsweise die Form einer Kreisscheibe, eines Rings, eines Zylinders oder eines Hohlzylinders. Ebenso kann der Codeträger als Kreissegment ausgebildet sein. Der Codeträger kann Reflektorelemente aufweisen, sowie ganz oder teilweise lichtdurchlässig sein.

Als Detektoren können, wie aus dem Stand der Technik bekannt, insbesondere Sensorarrays, wie beispielsweise in einer Zeile aufgereihte Photodioden, CCD- oder CMOS-Sensoren, aber auch Flächensensoren mit flächig angeordneten Photodioden, CCD-, CMOS- oder PSD-Sensoren, verwendet werden. Ebenso möglich ist ein Verwenden von Detektor- oder Abtastfolien, insbesondere mit organischen Photodetektoren, zum Beispiel Photodioden, und organischen Transistoren.

Ein Einsatzbereich für erfindungsgemässe Lagemessvorrichtungen sind geodätische Messinstrumente mit der Funktion der Richtungs- und Winkelbestimmung. So sind beispielsweise Theodoliten mit horizontalem und vertikalem Teilkreis und entsprechenden Ableseeinrichtungen ausgestattet, um Horizontal- und Vertikalwinkel mit höchster Genauigkeit messen zu können. Ebenso finden Lagemessvorrichtungen in Messmaschinen aller Art, wie zum Beispiel Koordinatenmessmaschinen mit Gelenkarmen, Anwendung.

Die erfindungsgemässe Lagemessvorrichtung wird im Folgenden anhand von schematisch dargestellten rein beispielhaften Ausführungen beschrieben. Weitere Vorteile und Kennzeichen der Erfindung sind aus der folgenden Beschreibung von derzeit bevorzugten Ausführungsformen im Zusammenhang mit den anhängenden Figuren ersichtlich. In den Figuren zeigen schematisch:

Fig. 1a     Komponenten einer erfindungsgemässen Lagemessvorrichtung;

Fig. 1b     ein Trägerelement einer erfindungsgemässen Lagemessvorrichtung in einer Aufsicht;

Fig. 1c     eine erfindungsgemässe Lagemessvorrichtung in einer Seitenansicht;

Fig. 2a     eine erste Ausführungsform einer erfindungsgemässen Lagemessvorrichtung mit Umlenkspiegeln;

Fig. 2b     eine zweite Ausführungsform einer erfindungsgemässen Lagemessvorrichtung mit einer Strahlumlenkung im Codeträger;

Fig. 2c     eine dritte Ausführungsform einer erfindungsgemässen Lagemessvorrichtung mit einem als Lichtleiter ausgebildeten Codeträger;

Fig. 3a     eine Anordnung von Codeträger und Trägerelement mit auf das Trägerelement aufgesetzten Messkomponenten;

Fig. 3b     eine erfindungsgemässe Anordnung von Codeträger und Trägerelement mit teilweise in das Trägerelement versenkten Messkomponenten und verringertem Abstand;

Fig. 3c     eine erfindungsgemässe Anordnung von Codeträger und Trägerelement mit vollständig in das Trägerelement versenkten Messkomponenten und minimiertem Abstand;

Fig. 4a     eine erfindungsgemässe Anordnung einer Strahlungsquelle in einem Sackloch einer Leiterplatte in einer Aufsicht;

Fig. 4b     die Anordnung aus Fig. 4a in einem Querschnitt;

Fig. 4c     eine alternative Anordnung zu Fig. 4b;

Fig. 5a     eine erfindungsgemässe Anordnung einer Strahlungsquelle in einer Vertiefung einer Leiterplatte in einer Aufsicht;

Fig. 5b     die Anordnung aus Fig. 5a in einem Querschnitt;

Fig. 5c     eine alternative Anordnung zu Fig. 5b;

Fig. 6a     eine erfindungsgemässe Anordnung eines Erfassungselementes in einer Vertiefung einer Leiterplatte in einer Aufsicht;

Fig. 6b     die Anordnung aus Fig. 6a in einem Querschnitt;

Fig. 6c     eine alternative Anordnung zu Fig. 6b;

Fig. 7a     eine erfindungsgemässe Anordnung eines Erfassungselementes in einer Vertiefung einer Leiterplatte in einer Aufsicht; und

Fig. 7b die Anordnung aus Fig. 7a in einem Querschnitt.

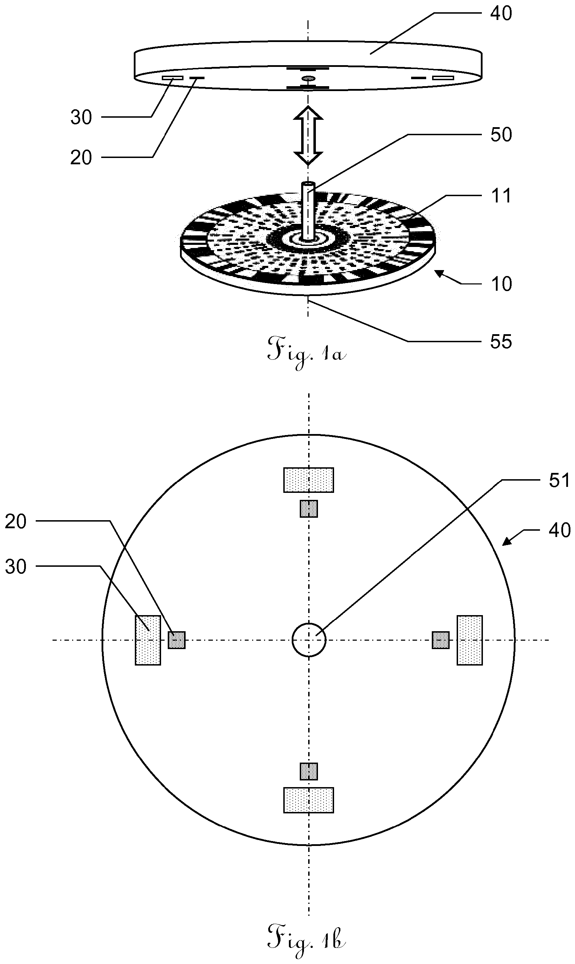

Die Figuren 1a bis 1c zeigen einen beispielhaften Aufbau einer erfindungsgemässen optoelektronischen Lagemessvorrichtung. In Figur 1a sind der Codeträger 10 und das Trägerelement 40 zur Aufnahme der optoelektronischen Bauteile dargestellt. Zur besseren Übersicht werden die beiden Komponenten im unmontierten Zustand gezeigt. Das Trägerelement 40 weist an seiner dem Codeträger zugewandten Vorderseite vier optoelektronische Messkomponentenpaare auf, bestehend aus jeweils einer Strahlungsquelle 20 und einem Erfassungselement 30. Der Codeträger 10 ist als kreisförmige Scheibe ausgestaltet und auf der Vorderseite im wesentlichen vollflächig mit einem Positionscode 11 versehen. Ein Achselement 50 verläuft entlang der Rotationsachse 55 und ermöglicht im montierten Zustand eine Rotation des Codeelementes 10 um die Rotationsachse 55 relativ zum Trägerelement 40.

In Figur 1b ist die Vorderseite des Trägerelementes 40 aus Figur 1a mit den vier optoelektronischen Messkomponentenpaaren in einer Aufsicht dargestellt. Das Trägerelement 40 weist in der Mitte eine Öffnung 51 zur Aufnahme des Achselementes 50 auf.

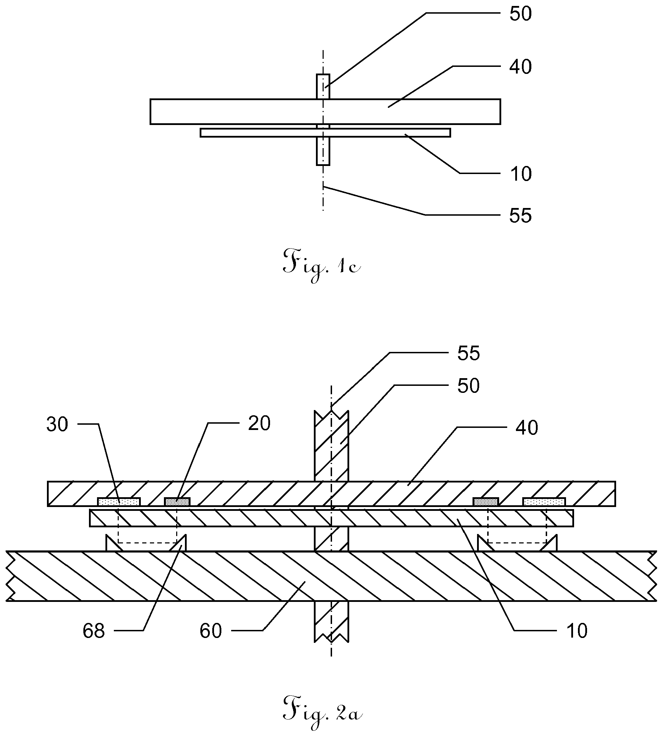

Figur 1c zeigt die optoelektronische Lagemessvorrichtung aus Figur 1a im montierten Zustand in einer Seitenansicht. Der Codeträger 10 ist parallel und mit einem möglichst geringen Abstand zu dem Trägerelement 40 und um die Rotationsachse 55 drehbar angeordnet.

In den Figuren 2a-c werden drei verschiedene beispielhafte Ausführungsformen der in den Figuren 1a bis 1c gezeigten optoelektronischen Lagemessvorrichtung dargestellt. Figur 2a zeigt eine beispielhafte Ausführungsform einer optoelektronischen Lagemessvorrichtung in einem Querschnitt. An einem Achselement 50 ist ein Codeträger 10 um die Rotationsachse 55 drehbar befestigt. Parallel zu dem Codeträger 10 ist ein Trägerelement 40 angeordnet, das mehrere Messkomponentepaare, bestehend aus Strahlungsquelle 20 und Erfassungselement 30, aufweist. Auf der dem Trägerelement 40 gegenüberliegenden Seite des Codeträgers 10 ist ein zum Trägerelement 40 in fester räumlicher Beziehung stehendes Spiegelträgerelement 60. Auf dem Spiegelträgerelement 60 sind gegenüber den Messkomponentenpaaren des Trägerelementes 40 Umlenkspiegelelemente 68 angebracht. Der Codeträger 10 ist zumindest teilweise durchlässig für die von der Strahlungsquelle 20 emittierte Strahlung. Diese trifft nach Durchquerung des Codeträgers 10 auf das Umlenkspiegelelement 68 und wird in Richtung des Erfassungselementes 30 umgelenkt.

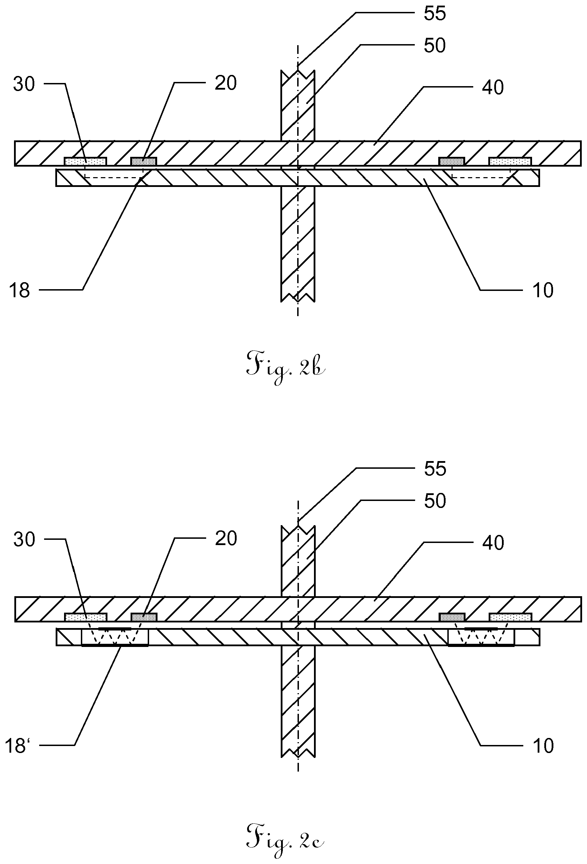

In der in Figur 2b dargestellten Ausführungsform fehlt gegenüber der in Figur 2a dargestellten das Spiegelträgerelement 60. Stattdessen sind im Codeträger 10 Strahlumlenkmittel 18 in Form von Umlenkspiegeln integriert, die die von der Strahlungsquelle emittierte Strahlung in Richtung des Erfassungselementes 30 umlenken.

In der in Figur 2c dargestellten Ausführungsform funktioniert im Unterschied zu der in Figur 2b dargestellten das in den Codeträger 10 integrierte Strahlumlenkmittel 18' wie ein Lichtleiter. Durch Verspiegelungen auf der Innenseite des Codeträgers 10 wird das Licht durch den zumindest teilweise strahlungsdurchlässigen Codeträger 10 geleitet und schliesslich auf das Erfassungselement 30 gelenkt. Alternativ kann die Strahlung diffraktiv in einen Wellenleiter ein- und ausgekoppelt werden.

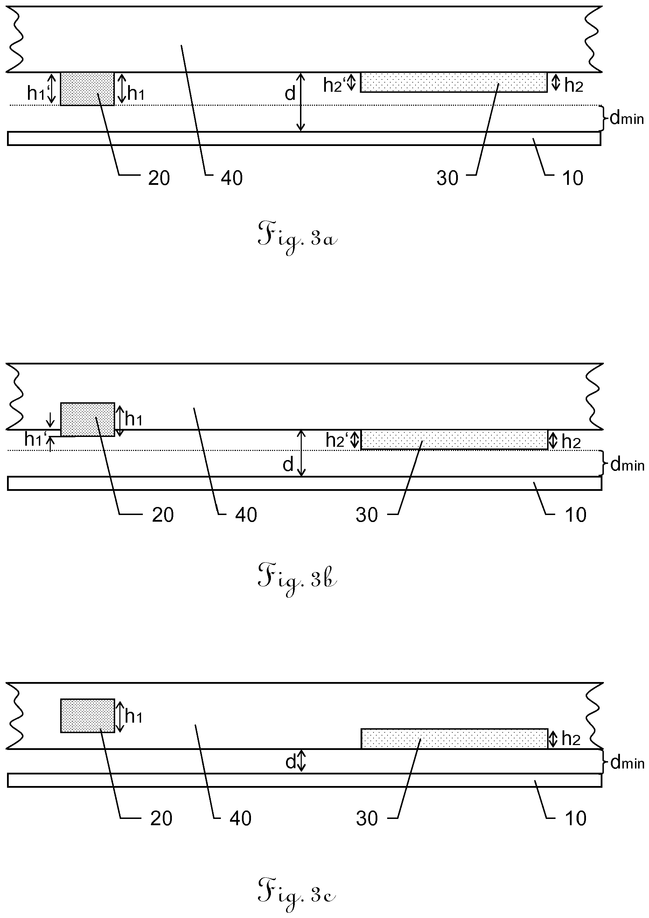

Durch die Figuren 3a-c wird das Prinzip des Verringern des Abstandes d zwischen dem Codeträger 10 und dem Trägerelement 40 durch erfindungsgemässes Versenken von Messkomponenten 20,30 in das Trägerelement illustriert.

Figur 3a zeigt im Querschnitt einen Ausschnitt aus einer Lagemessvorrichtung mit einem Codeträger 10 und einem Trägerelement 40. Auf das Trägerelement 40 sind als Messkomponenten eine Strahlungsquelle 20 und ein Erfassungselement 30 aufgesetzt, wobei die beiden Messkomponenten unterschiedliche Höhen $h_1, h_2$ aufweisen. Da Strahlungsquelle 20 und Erfassungselement 30 auf die Oberfläche des Trägerelementes 40 aufgesetzt sind, sind ihre Überstände $h_1', h_2'$ über die Oberfläche des Trägerelementes 40 gleich ihren jeweiligen Höhen $h_1, h_2$.

Die Überstände $h_1', h_2'$ sind definiert durch die Positionen der Stirnseiten der Messkomponenten auf einer gedachten Koordinatenachse (nicht dargestellt) relativ zu der dem Codeträger 10 zugewandten Vorderseite des Trägerelementes 40. Diese Koordinatenachse verläuft in derjenigen Richtung, in welcher der Codeträger 10 auf das Trägerelement 40 folgt (in dieser Darstellung also vertikal von oben nach unten), wobei die Vorderseite des Trägerelementes 40 den Nullpunkt der Koordinatenachse darstellt. Liegt die Stirnseite also zwischen der Vorderseite und dem Codeträger 10, weist die die Position angebende Koordinate (d. h. der jeweilige Überstand $h_1', h_2'$) einen positiven Wert auf; liegt die Stirnseite genau auf der Vorderseite, beispielsweise koplanar zu dieser, ist der Wert dieser Koordinate bzw. des Überstandes $h_1', h_2'$ gleich Null; und liegt die Stirnseite vom Codeträger 10 aus betrachtet hinter der Vorderseite des Trägerelementes 40, weist die Koordinate bzw. der jeweilige Überstand $h_1', h_2'$ einen negativen Wert auf.

Die Oberfläche der dem Codeträger 10 zugewandten Vorderseite des Trägerelementes 40 ist hier durch eine gerade Linie dargestellt. Die Vorderseite ist zwar vorzugsweise eine im wesentlichen ebene Fläche, aber nicht notwendigerweise. Die Oberfläche der Vorderseite kann ebenso uneben, beispielsweise gewellt oder stufig, sein, sowie Erhebungen, Vertiefungen und Löcher aufweisen. Im Falle einer solchen unebenen Oberfläche ist die Vorderseite als eine ebene Fläche durch den Punkt der kürzesten Distanz zum Codeträger definiert.

Ebenfalls dargestellt ist ein Funktionsmindest-

abstand $d_{min}$, der durch eine gepunktete Linie repräsentiert wird. Er ist in der Praxis durch die Funktionsweise einer erfindungsgemässen optoelektronischen Lagemessvorrichtung bedingt und in der Regel - in Abhängigkeit von Fertigungstoleranzen, gewählten Materialien, Temperaturschwankungen und weiteren Faktoren - für einen störungsfreien Betrieb der Vorrichtung nötig. Theoretisch kann der Funktionsmindestabstand $d_{min}$ aber gegen null gehen, weshalb auch Ausführungsformen mit einem vernachlässigbar kleinen Funktionsmindestabstand $d_{min}$ denkbar sind.

Der minimale Abstand d zwischen dem Codeträger 10 und dem Trägerelement 40 ist zum einen durch den Funktionsmindestabstand $d_{min}$ und zum anderen durch die Überstände $h_1$',$h_2$' der Messkomponenten 20,30 bedingt. Der Abstand d kann dabei nie kleiner sein als

- der Funktionsmindestabstand $d_{min}$,

- die Summe aus dem Funktionsmindestabstand $d_{min}$ und dem Überstand $h_1$' der Strahlungsquelle 20, und/oder

- die Summe aus dem Funktionsmindestabstand $d_{min}$ und dem Überstand $h_2$' des Erfassungselementes 30.

Für d muss somit gelten:

$$d \geq d_{min}$$

$$d \geq d_{min} + h_1'$$

$$d \geq d_{min} + h_2'$$

Da der Funktionsmindestabstand $d_{min}$ auch gegen null gehen kann, muss der Abstand d in jedem Fall gleich oder grösser sein als die Überstände $h_1$',$h_2$' der Messkomponenten 20,30.

Die höhere der beiden auf die Oberfläche des Trägerelementes 40 aufgesetzten Messkomponenten - in dieser Darstellung die Strahlungsquelle 20 - bildet die höchste Erhebung auf dem Trägerelement 40; die mögliche Untergrenze für den Abstand d ist hier daher gleich der Summe des Überstandes $h_1$' und des Funktionsmindestabstandes $d_{min}$. Um den Abstand d über die momentan gegebene Untergrenze hinaus zu verringern, ist es hier also notwendig, den Überstand $h_1$' der Strahlungsquelle 20 zu verringern. Bis zu einem gewissen Grad könnte dies zwar durch eine Verkleinerung der Höhe $h_1$ der Strahlungsquelle 20, beispielsweise durch eine Veränderung in ihrem Aufbau, erreicht werden. Weniger aufwendig und deutlich effektiver ist jedoch die erfindungsgemässe Versenkung der Strahlungsquelle 20 im Trägerelement 40.

In Figur 3b ist die Strahlungsquelle 20 erfindungsgemäss teilweise im Trägerelement 40 versenkt. Dadurch ist der Überstand $h_1$' der Strahlungsquelle 20 soweit reduziert, dass nun der Überstand $h_2$' des Erfassungselementes 30 der grössere ist. Der Abstand d ist nun durch die Summe des Überstandes $h_2$' und des Funktionsmindestabstandes $d_{min}$ bedingt und kann gegenüber dem in Figur 3a dargestellten kleiner ausfallen. Da ein möglichst geringer Abstand d angestrebt wird, ist in dieser Darstellung der Codeträger 10 näher an das Trägerelement 40 herangerückt.

In Figur 3c sind die Strahlungsquelle 20 und das Erfassungselement 30 vollständig im Trägerelement 40 versenkt - die Stirnseite der Strahlungsquelle 20 liegt auf einer Ebene hinter der Vorderseite des Trägerelementes 40, die Stirnseite des Erfassungselementes 30 genau auf der Ebene der Vorderseite. Es gibt keine Überstände $h_1$',$h_2$', die für eine Bestimmung des minimalen Abstandes d relevant sind, da der Überstand $h_1$' der Strahlungsquelle 20 negativ ist, und der Überstand $h_2$' des Erfassungselementes 30 gleich null ist. Der kleinstmögliche Abstand d entspricht hier darum dem Funktionsmindestabstand $d_{min}$ und ist somit minimiert.

Im Folgenden werden verschiedene beispielhafte Ausführungsformen dargestellt, in denen eine Messkomponente erfindungsgemäss in einer Leiterplatte versenkt angeordnet ist.

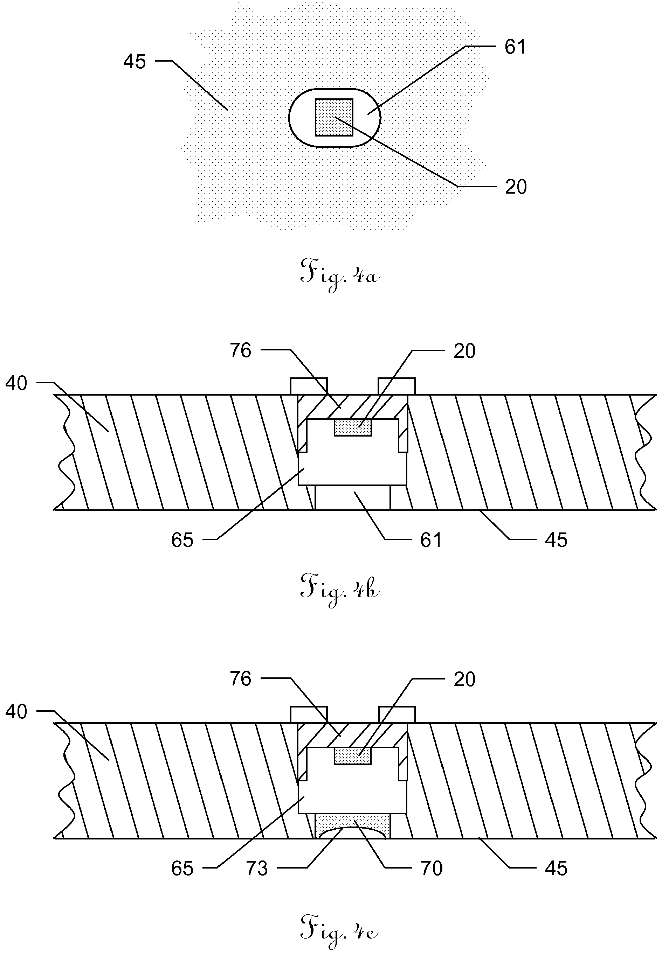

In den Figuren 4a-c ist eine Leiterplatte 40 mit einer sacklochartigen Vertiefung 65 zur Aufnahme einer Strahlungsquelle 20, beispielsweise eines LED-Chips, dargestellt. Figur 4a zeigt eine Aufsicht auf die Vorderseite 45 (die dem Codeträger 10 zugewandte Seite) der Leiterplatte. Eine Öffnung 61 auf der Vorderseite 45 dient als Blende für die von der dahinterliegenden Strahlungsquelle 20 emittierte Messstrahlung.

Figur 4b zeigt die in Figur 4a dargestellte Anordnung in einem Querschnitt. Die Leiterplatte 40 weist an ihrer Rückseite (die vom Codeträger 10 abgewandte Seite) eine Vertiefung 65 in Form eines Sackloches auf, die insbesondere durch Fräsen erzeugt sein kann. In die Vertiefung 65 ist ein Halteelement 76 mit einer Strahlungsquelle 20 eingebracht, beispielsweise in Form eines LED-Chips mit oder ohne Gehäuse. Das Halteelement 76 ist an der Leiterplatte 40 befestigt und verschliesst die Vertiefung 65 zur Rückseite hin. Eine Öffnung 61 verbindet die Vertiefung 65 mit der Vorderseite 45 der Leiterplatte 40. Diese Öffnung 61 kann insbesondere eine Bohrung sein und dient als Blende für die von der Strahlungsquelle 20 emittierte Strahlung.

Ist die verbliebene Wand zwischen Sackloch und Vorderseite 45 zu dünn und daher durchscheinend, so kann sie beispielsweise mit einer Kupferschicht, ähnlich einem Lötpunkt, für die von der Strahlungsquelle 20 emittierte Messstrahlung undurchlässig gemacht werden.

Figur 4c zeigt eine alternative Ausführungsform der in Figur 4b dargestellten Anordnung. Dabei ist die Öffnung 61 teilweise mit einem Füllkleber 70 verfüllt. Der Füllkleber 70 weist zur Vorderseite 45 der Leiterplatte 40 hin eine diffraktive oder refraktive Oberfläche 73 auf.

In weiteren alternativen Ausführungsformen kann in der Öffnung 61 der Blende auch ein (nicht dargestelltes) optisches - refraktives oder diffraktives - Element plaziert werden. Dieses kann am Aussenrand mit einer Kupferschicht versehen sein, so dass das Element in oder auf die Öffnung gelötet werden kann. Es können auch Einkopplungselemente für eine Glasfaser montiert oder auch die Glasfaser direkt in die Öffnung eingeklebt werden.

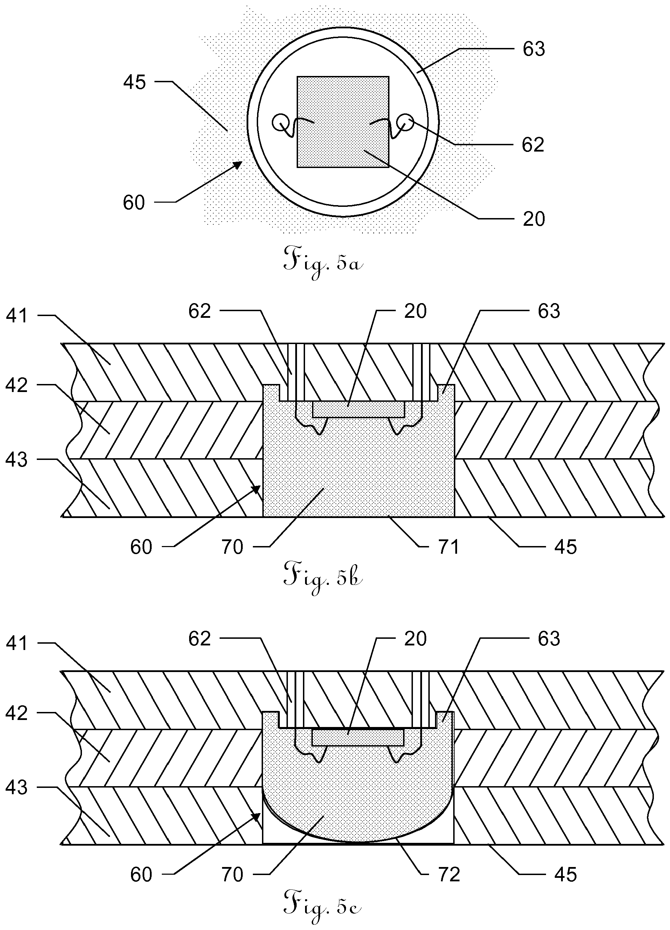

In den Figuren 5a-c ist eine aus mehreren Schichten 41-43 zusammengesetzte Leiterplatte mit einer verfüllten Vertiefung 60 zur Aufnahme einer Strahlungsquelle 20 dargestellt. Figur 5a zeigt eine Aufsicht auf die Vorderseite 45 der Leiterplatte. In der runden Vertiefung 60 ist eine Strahlungsquelle 20 montiert. Durch zwei Verbindungskontaktlöcher 62, die zur Rückseite der Leiterplatte führen, führen Anschlüsse zur Strahlungsquelle 20. Alternativ kann die Strahlungsquelle 20 auch über Leiterbahnen (nicht dargestellt) einer der Schichten, beispielsweise der Leiterplatten-Schicht 41 kontaktiert werden. Die insbesondere durch Fräsen hergestellte Vertiefung 60 weist an ihrem Aussenrand eine Kleberfalle 63 auf.

Figur 5b zeigt die in Figur 5a dargestellte Anordnung in einem Querschnitt. Die Leiterplatte besteht aus drei Schichten 41-43, welche insbesondere durch Kleben miteinander verbunden sind. Die Vertiefung 60 ist mit einem Füllkleber 70 verfüllt. Die Oberfläche 71 des Füllklebers 70 schliesst bündig mit der Oberfläche 45 der Leiterplatte ab.

Die Kleberfalle 63 ist als Rinne am Rand der Vertiefung 60 ausgeführt und wird zusammen mit der Vertiefung 60 in die Leiterplatte gefräst. Die Kleberfalle 63 dient während der Montage dazu, überschüssigen Klebstoff aufzunehmen, der beim Zusammenpressen der einzelnen Schichten 41-43 und/oder nach dem Ausfräsen der Vertiefung 60 eventuell aus den Klebeflächen zwischen den Schichten 41-43 in die Vertiefung 60 austreten kann. Dadurch bleibt der Boden der Vertiefung 60, auf dem die Strahlungsquelle 20 montiert wird, von Klebstoff frei.

Figur 5c zeigt eine alternative Ausführungsform der in Figur 5b dargestellten Anordnung. Dabei ist die Vertiefung 60 nicht vollständig verfüllt, und der Füllkleber 70 weist eine diffraktive oder refraktive Oberfläche 72 auf.

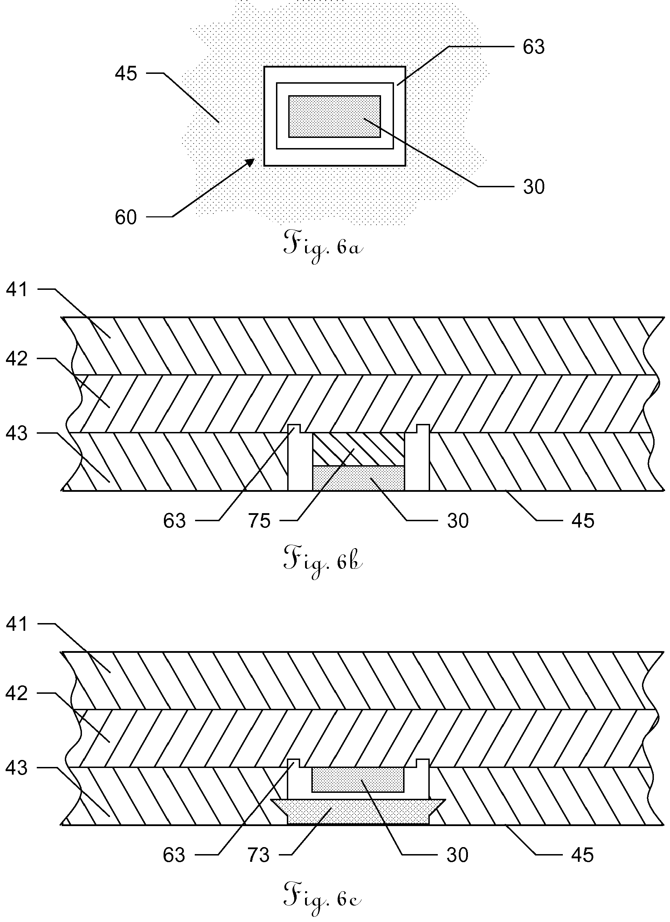

In den Figuren 6a-c ist eine aus mehreren Schichten 41-43 zusammengesetzte Leiterplatte mit einer Vertiefung 60 zur Aufnahme eines Erfassungselementes 30 dargestellt. Figur 6a zeigt eine Aufsicht auf die Vorderseite 45 der Leiterplatte. In der rechteckigen Vertiefung 60 ist ein Erfassungselement 30 montiert. Die insbesondere durch Fräsen hergestellte Vertiefung 60 weist an ihren Rändern eine Kleberfalle 63 auf.

Figur 6b zeigt die in Figur 6a dargestellte Anordnung in einem Querschnitt. Die Leiterplatte besteht aus drei Schichten 41-43, welche insbesondere durch Kleben miteinander verbunden sind. Das Erfassungselement 30 ist in der Vertiefung so angeordnet, dass seine Oberfläche in einer gemeinsamen Ebene mit der Oberfläche 45 der Leiterplatte liegt. Dazu ist das Erfassungselement 30 auf einem Zwischenstück 75 angeordnet.

Figur 6c zeigt eine alternative Ausführungsform der in Figur 6b dargestellten Anordnung. Dabei ist das Erfassungselement 30 auf dem Boden der Vertiefung angeordnet, und ein optisches Element 73 ist so an der Öffnung der Vertiefung angebracht, dass die Oberfläche des optischen Elementes 73 mit der Oberfläche 45 der Leiterplatte bündig abschliesst.

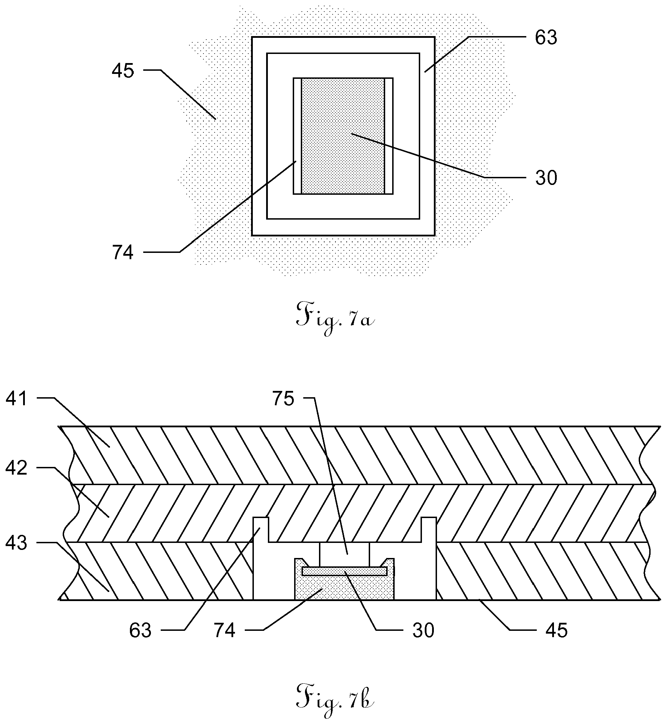

In den Figuren 7a-b ist eine aus mehreren Schichten 41-43 zusammengesetzte Leiterplatte mit einer Vertiefung 60 zur Aufnahme eines Erfassungselementes 30 dargestellt. Figur 7a zeigt eine Aufsicht auf die Vorderseite 45 der Leiterplatte. In der rechteckigen Vertiefung 60 ist ein Erfassungselement 30 mit einem aufgesteckten optischen Element 74 montiert. Die insbesondere durch Fräsen hergestellte Vertiefung 60 weist an ihren Rändern eine Kleberfalle 63 auf.

Figur 7b zeigt die in Figur 7a dargestellte Anordnung in einem Querschnitt. Die Leiterplatte besteht auch hier aus drei Schichten 41-43. Das Erfassungselement 30 ist auf einem Zwischenstück 75 angeordnet. Am Erfassungselement 30 ist ein aufgestecktes optisches Element 74 befestigt. Die Oberfläche des optischen Elementes 74 liegt dabei in einer gemeinsamen Ebene mit der Oberfläche 45 der Leiterplatte.

Es versteht sich, dass diese dargestellten Figuren nur mögliche Ausführungsbeispiele schematisch darstellen. Die verschiedenen Ansätze können ebenso miteinander sowie mit Verfahren und Geräten des Stands der Technik kombiniert werden.

**Patentansprüche**

1. Optoelektronische Lagemessvorrichtung, aufweisend

   • einen Codeträger (10), der einen optisch erfassbaren Positionscode (11) trägt,
   • eine Strahlungsquelle (20) zur Emission von optischer Strahlung auf den Codeträger (10) und
   • ein Erfassungselement (30) mit einer Vielzahl von lichtempfindlichen Empfangsbereichen zum Empfang wenigstens eines Teiles der optischen Strahlung, wodurch ein vom Positionscode (11) abhängiges Abtastsignal erzeugbar ist und somit eine Lage des Codeträgers (10) relativ zum Erfassungselement (30) erfassbar ist,

wobei

• die Messkomponenten Strahlungsquelle (20) und Erfassungselement (30)

• in fester räumlicher Beziehung zueinander und jeweils mit einer dem Codeträger (10) zugewandten Stirnseite auf einem Trägerelement (40) angeordnet sind, wobei das Trägerelement (40) eine Leiterplatte ist,
• zwischen der Stirnseite und einer Basis jeweils eine Höhe ($h_1$, $h_2$) aufweisen, und
• zwischen der Stirnseite und einer dem Codeträger (10) zugewandten Vorderseite (45) des Trägerelementes (40) jeweils einen Überstand ($h_1$', $h_2$') aufweisen,

• der Codeträger (10) mit einem Freiheitsgrad, insbesondere rotatorisch oder entlang einer Achse, beweglich ist, und
• der Codeträger (10) und das Trägerelement (40) parallel zueinander und mit einem festen räumlichen Abstand (d) zueinander angeordnet sind, der

• mindestens so gross ist wie der Überstand ($h_1$') der Strahlungsquelle (20), und
• mindestens so gross ist wie der Überstand ($h_2$') des Erfassungselementes (30), wobei von den Messkomponenten Strahlungsquelle (20) und Erfassungselement (30) wenigstens diejenige Messkomponente (20, 30) mit der grösseren Höhe (h1, h2) auf dem Trägerelement (40) jeweils so auf einer im Vergleich zur Vorderseite (45) weiter vom Codeträger (10) entfernt liegenden Ebene angeordnet ist, dass ihr Überstand (h1', h2') geringer ist als ihre Höhe (h1, h2), wobei der Überstand (h1', h2') der Messkomponenten (20, 30) jeweils einen positiven Wert aufweist, einen negativen Wert aufweist oder gleich Null ist, wodurch für den Abstand (d) ein geringerer Wert wählbar ist, verglichen mit einer Vorrichtung, bei welcher die Messkomponenten (20, 30) auf einer durch die Vorderseite (45) definierten Ebene angeordnet sind.

2. Optoelektronische Lagemessvorrichtung nach Anspruch 1, wobei die Strahlungsquelle (20) und/oder das Erfassungselement (30) auf dem Trägerelement (40) in jeweils einer Vertiefung (60, 65) angeordnet sind.

3. Optoelektronische Lagemessvorrichtung nach einem der vorangegangenen Ansprüche, wobei die Strahlungsquelle (20) und/oder das Erfassungselement (30) auf dem Trägerelement (40) mit ihrer Stirnseite nicht über die Vorderseite (45) des Trägerelementes (40) in Richtung des Codeträgers (10) hinausragen.

4. Optoelektronische Lagemessvorrichtung nach einem der vorangegangenen Ansprüche, wobei die Strahlungsquelle (20) und/oder das Erfassungselement (30) abdeckglaslos verbaut sind.

5. Optoelektronische Lagemessvorrichtung nach einem der vorangegangenen Ansprüche, wobei die Strahlungsquelle (20) und das Erfassungselement (30) auf dem Trägerelement (40) jeweils auf einer Ebene angeordnet sind, die weiter vom Codeträger (10) entfernt liegt als die Vorderseite (45) des Trägerelementes (40).

6. Optoelektronische Lagemessvorrichtung nach einem der vorangegangenen Ansprüche, wobei

• in der Oberfläche einer dem Codeträger (10) abgewandten Rückseite des Trägerelementes (40) eine Vertiefung (65), insbesondere ein Sackloch, bereitgestellt ist, die eine Öffnung (61), insbesondere eine Bohrung, zur Vorderseite (45) des Trägerelementes (40) aufweist,
• die Strahlungsquelle (20) in der Vertiefung (65) angebracht ist, und
• die Strahlungsquelle (20) und die Öffnung (61) dergestalt zueinander ausgerichtet sind, dass von der Strahlungsquelle (20) optische Strahlung durch die Öffnung (61) auf den Codeträger (10) emittierbar ist, insbesondere wobei die Öffnung (61) als Blende dient.

7. Optoelektronische Lagemessvorrichtung nach Anspruch 6, wobei

• die Vertiefung (65) zur Rückseite hin mittels eines Verschlusses (76) verschlossen ist,
• ein zwischen der Vertiefung (65) und der Vorderseite (45) befindlicher Teil des Trägerelementes (40) opak gemacht ist, insbesondere mittels einer Kupferschicht, und/oder
• die Öffnung (61) ganz oder teilweise mit einem optischen Füllkleber (70) verfüllt ist, der insbesondere

• eine ebene Oberfläche (71) aufweist, die mit der Vorderseite (45) des Trägerelementes (40) eine ebene Fläche bildet, oder
• an der Vorderseite (45) des Trägerelementes (40) eine optische diffraktive oder refraktive Oberfläche (72, 73) aufweist.

8. Optoelektronische Lagemessvorrichtung nach einem der Ansprüche 1 bis 5, wobei die Strahlungsquelle (20) in einer Vertiefung (60) auf der Vorderseite (45) des Trägerelementes (40) angebracht ist.

9.  Optoelektronische Lagemessvorrichtung nach einem der vorangegangenen Ansprüche, wobei das Erfassungselement (30) in einer Vertiefung (60) auf der Vorderseite (45) des Trägerelementes (40) angebracht ist, insbesondere wobei

    • das Erfassungselement (30) mit der dem Codeträger (10) zugewandten Seite (45) des Trägerelementes (40) eine ebene Fläche bildet, oder
    • ein in der Vertiefung (60) vor dem Erfassungselement (30) angebrachtes optisches Bauteil (73, 74), insbesondere mittels eines Klickmechanismus am Trägerelement (30) oder am Erfassungselement befestigt, mit der Vorderseite (45) des Trägerelementes (40) eine ebene Fläche bildet.

10. Optoelektronische Lagemessvorrichtung nach einem Anspruch 8 oder Anspruch 9, wobei die Vertiefung (60) ganz oder teilweise mit einem optischen Füllkleber (70) verfüllt ist, der

    • eine ebene Oberfläche (71) aufweist, die mit der Vorderseite (45) des Trägerelementes (40) eine ebene Fläche bildet, oder
    • an der Vorderseite (45) des Trägerelementes (40) eine optische diffraktive oder refraktive Oberfläche (72, 73) aufweist,

    insbesondere wobei die Vertiefung (60) ein Verbindungskontaktloch (62) und/oder eine Kleberfalle (63) aufweist.

11. Optoelektronische Lagemessvorrichtung nach einem der vorangegangenen Ansprüche, wobei der Codeträger (10)

    • als kreisförmige Scheibe ausgestaltet ist,
    • um eine Achse (55) drehbar ist, wobei vom Erfassungselement (30) ein Drehwinkel um die Achse (55) erfassbar ist, und/oder
    • Strahlumlenkmittel (18, 18'), insbesondere in Form von Spiegeln und/oder Wellenleitern, aufweist, um die von der Strahlungsquelle (20) emittierte Strahlung, insbesondere durch Reflexion, auf das Erfassungselement (30) zu lenken,

    insbesondere wobei der Positionscode (11) im wesentlichen vollflächig auf der dem Trägerelement (40) zugewandten Seite des Codeträgers (10) angebracht ist.

12. Optoelektronische Lagemessvorrichtung nach einem der vorangegangenen Ansprüche, wobei das Trägerelement (40) aus mehreren Schichten (41, 42, 43) zusammengesetzt ist, insbesondere geklebt.

## Claims

1.  Optoelectronic position measuring apparatus, comprising

    • a code carrier (10), which carries an optically detectable position code (11),
    • a radiation source (20) for emitting optical radiation onto the code carrier (10) and
    • a detection element (30) having a multiplicity of light-sensitive receiving regions for receiving at least part of the optical radiation, as a result of which a scanning signal dependent on the position code (11) can be generated and a position of the code carrier (10) relative to the detection element (30) can thus be detected,

    wherein

    • the measuring components radiation source (20) and detection element (30)
    • are arranged parallelly and in a fixed spatial relationship with respect to one another and in each case with an end side facing the code carrier (10) on a carrier element (40), the carrier element (40) being a printed circuit board,

       • in each case have a height ($h_1$, $h_2$) between the end side and a base, and
       • in each case have an overhang ($h_1'$, $h_2'$) between the end side and a front side (45) of the carrier element (40), said front side facing the code carrier (10),

    • the code carrier (10) is movable with one degree of freedom, in particular rotationally or along an axis, and
    • the code carrier (10) and the carrier element (40) are arranged at a fixed spatial distance (d) with respect to one another, said distance

       • being at least of the same magnitude as the overhang ($h_1'$) of the radiation source (20), and
       • being at least of the same magnitude as the overhang ($h_2'$) of the detection element (30),

    wherein
    of the measuring components radiation source (20) and detection element (30) at least that measuring component (20, 30) having the greater height ($h_1$, $h_2$) is arranged on the carrier element (40) respectively on a plane situated further away from the code carrier (10) in comparison with the front side (45) such that its overhang ($h_1'$, $h_2'$) is less than its height ($h_1$, $h_2$) in particular whereby a smaller value can be chosen for the distance (d), compared with an apparatus in which the measuring components (20, 30) are arranged on a plane defined by the front side (45).

**2.** Optoelectronic position measuring apparatus according to Claim 1 or Claim 2, wherein the radiation source (20) and/or the detection element (30) are arranged on the carrier element (40) in a respective depression (60, 65).

**3.** Optoelectronic position measuring apparatus according to any one of the preceding claims, wherein

• the radiation source (20) and/or the detection element (30) on the carrier element (40) with their end side do not project beyond the front side (45) of the carrier element (40) in the direction of the code carrier (10).

**4.** Optoelectronic position measuring apparatus according to any one of the preceding claims, wherein the radiation source (20) and/or the detection element (30) are constructed in a manner free of covering glass.

**5.** Optoelectronic position measuring apparatus according to any one of the preceding claims, wherein the radiation source (20) and the detection element (30) are arranged on the carrier element (40) respectively on a plane situated further away from the code carrier (10) than the front side (45) of the carrier element (40).

**6.** Optoelectronic position measuring apparatus according to any one of the preceding claims, wherein

• in the surface of a rear side of the carrier element (40), said rear side facing away from the code carrier (10), a depression (65), in particular a blind hole, is provided, which has an opening (61), in particular a drilled hole, to the front side (45) of the carrier element (40),
• the radiation source (20) is fitted in the depression (65), and
• the radiation source (20) and the opening (61) are aligned with one another in such a way that optical radiation from the radiation source (20) can be emitted through the opening (61) onto the code carrier (10), in particular wherein the opening (61) serves as a diaphragm.

**7.** Optoelectronic position measuring apparatus according to claim 6, wherein

• the depression (65) is closed toward the rear side by means of a closure (76),
• a part of the carrier element (40) that is situated between the depression (65) and the front side (45) is made opaque, in particular by means of a copper layer, and/or
• the opening (61) is filled wholly or partly with an optical filling adhesive (70), which in particular

• has a planar surface (71) that forms a planar area with the front side (45) of the carrier element (40), or
• has an optical diffractive or refractive surface (72, 73) at the front side (45) of the carrier element (40).

**8.** Optoelectronic position measuring apparatus according to any one of Claims 1 to 5, wherein the radiation source (20) is fitted in a depression (60) on the front side (45) of the carrier element (40).

**9.** Optoelectronic position measuring apparatus according to any one of the preceding claims, wherein the detection element (30) is fitted in a depression (60) on the front side (45) of the carrier element (40), particularly wherein

• the detection element (30) forms a planar area with the side (45) of the carrier element (40) facing the code carrier (10), or
• an optical component (73, 74) fitted in front of the detection element (30) in the depression (60), in particular fixed to the carrier element (30) or to the detection element by means of a click mechanism, forms a planar area with the front side (45) of the carrier element (40).

**10.** Optoelectronic position measuring apparatus according to Claim 8 or Claim 9, wherein the depression (60) is filled wholly or partly with an optical filling adhesive (70), which

• has a planar surface (71) that forms a planar area with the front side (45) of the carrier element (40), or
• has an optical diffractive or refractive surface (72, 73) at the front side (45) of the carrier element (40),

particularly wherein the depression (60) has a via hole (62) and/or an adhesive trap (63).

**11.** Optoelectronic position measuring apparatus according to any one of the preceding claims, wherein the code carrier (10)

• is configured as a circular disc,

• is rotatable about an axis (55), wherein an angle of rotation about the axis (55) can be detected by the detection element (30), and/or
• has beam deflection means (18, 18') in particular in the form of mirrors and/or waveguides, in order to direct the radiation emitted by the radiation source (20) onto the detection element (30), in particular by reflection,

particularly wherein the position code (11) is fitted substantially over the whole area on that side of the code carrier (10) which faces the carrier element (40).

12. Optoelectronic position measuring apparatus according to any one of the preceding claims, wherein the carrier element (40) is assembled, in particular adhesively bonded, from a plurality of layers (41, 42, 43).

**Revendications**

1. Dispositif optoélectronique de mesure de position, présentant

   • un support de code (10) qui porte un code de position (11) pouvant être détecté optiquement,
   • une source de rayonnement (20) destinée à émettre un rayonnement optique vers le support de code (10), et
   • un élément de détection (30) doté d'une pluralité de zones réceptrices sensibles à la lumière et destinées à recevoir au moins une partie du rayonnement optique, moyennant lequel il est possible de produire un signal échantillonné dépendant du code de position (11) et donc de détecter la position du support de code (10) par rapport à l'élément de détection (30),

   dans lequel

   • les composants de mesure que sont la source de rayonnement (20) et l'élément de détection (30)

      o possèdent une disposition spatiale relative fixe et sont chacun disposés sur un élément support (40) et dotés d'une face frontale orientée vers le support de code (10), l'élément support (40) étant un circuit imprimé,
      o présentent chacun une hauteur ($h_1$, $h_2$) entre la face frontale et une base, et
      o présentent chacun une saillie ($h_1$', $h_2$') entre la face frontale et une face avant (45) de l'élément support (40) orientée vers le support de code (10),

• le support de code (10) est mobile selon un certain degré de liberté, notamment en rotation ou le long d'un axe, et
• le support de code (10) et l'élément support (40) sont disposés parallèlement l'un à l'autre et séparés par une distance (d) constante, qui

      o est au moins égale à la saillie ($h_1$') de la source de rayonnement (20), et
      o est au moins égale à la saillie ($h_2$') de l'élément de détection (30),

et dans lequel
parmi les deux composants de mesure que sont la source de rayonnement (20) et l'élément de détection (30), au moins celui des composants de mesure (20, 30) qui présente la plus grande hauteur ($h_1$, $h_2$) est disposé sur l'élément support (40) dans un plan situé à plus grande distance du support de code (10) que la face avant (45), en étant ainsi disposé de sorte que sa saillie ($h_1$', $h_2$') est inférieure à sa hauteur ($h_1$, $h_2$), la saillie ($h_1$', $h_2$') des composants de mesure (20, 30) pouvant être pour chacun positive, négative ou nulle, ce qui permet de choisir, pour la distance (d), une valeur plus faible que dans un dispositif dont les composants de mesure (20, 30) seraient disposés dans le plan défini par la face avant (45).

2. Dispositif optoélectronique de mesure de position selon la revendication 1, la source de rayonnement (20) et/ou l'élément de détection (30) étant disposés chacun sur l'élément support (40), dans une cavité (60, 65).

3. Dispositif optoélectronique de mesure de position selon l'une des revendications précédentes, la source de rayonnement (20) et/ou l'élément de détection (30) sur l'élément support (40) possédant une face frontale qui ne dépasse pas la face avant (45) de l'élément support (40) en direction du support de code (10).

4. Dispositif optoélectronique de mesure de position selon l'une des revendications précédentes, la source de rayonnement (20) et/ou l'élément de détection (30) étant exempts de verre de protection.

5. Dispositif optoélectronique de mesure de position selon l'une des revendications précédentes, la source de rayonnement (20) et l'élément de détection (30) étant chacun disposés sur l'élément support (40) dans un plan situé à plus grande distance du support de code (10) que la face avant (45) de l'élément support (40).

6. Dispositif optoélectronique de mesure de position selon l'une des revendications précédentes, dans lequel

• il est préparé une cavité (65), notamment un trou borgne, dans la surface d'une face arrière de l'élément support (40) orientée à l'opposé du support de code (10), laquelle cavité présente une ouverture (61), notamment un perçage, vers la face avant (45) de l'élément support (40),
• la source de rayonnement (20) est fixée dans la cavité (65), et
• la source de rayonnement (20) et l'ouverture (61) possèdent une disposition relative telle que le rayonnement optique peut être émis par la source de rayonnement (20) au travers de l'ouverture (61) et vers le support de code (10), l'ouverture (61) servant notamment de diaphragme.

**7.** Dispositif optoélectronique de mesure de position selon la revendication 6, dans lequel

• la cavité (65) est fermée par un obturateur (76) du côté de la face arrière,
• une pièce de l'élément support (40) située entre la cavité (65) et la face avant (45) est opacifiée, notamment au moyen d'une couche de cuivre, et/ou
• l'ouverture (61) est totalement ou partiellement remplie par une colle de remplissage optique (70), qui notamment

   ◦ présente une surface plane (71) formant une face plane avec la face avant (45) de l'élément support (40), ou
   ◦ présente une surface optique diffractive ou réfractive (72, 73) sur la face avant (45) de l'élément support (40).

**8.** Dispositif optoélectronique de mesure de position selon l'une des revendications 1 à 5, la source de rayonnement (20) étant fixée dans une cavité (60) sur la face avant (45) de l'élément support (40).

**9.** Dispositif optoélectronique de mesure de position selon l'une des revendications précédentes, l'élément de détection (30) étant fixé dans une cavité (60) sur la face avant (45) de l'élément support (40), notamment dans lequel

• l'élément de détection (30) forme une face plane avec la face (45) de l'élément support (40) orientée vers le support de code (10), ou
• un composant optique (73, 74) fixé dans la cavité (60) en face de l'élément de détection (30), notamment fixé au moyen d'un encliquetage sur l'élément support (40) ou sur l'élément de détection (30), forme une face plane avec la face avant (45) de l'élément support (40).

**10.** Dispositif optoélectronique de mesure de position selon la revendication 8 ou 9, la cavité (60) étant totalement ou partiellement remplie par une colle de remplissage optique (70), ladite colle

• présentant une surface plane (71) qui forme une face plane avec la face avant (45) de l'élément support (40), ou
• présentant une surface optique diffractive ou réfractive (72, 73) sur la face avant (45) de l'élément support (40),

la cavité (60) présentant notamment un trou d'interconnexion (62) et/ou un piège à colle (63).

**11.** Dispositif optoélectronique de mesure de position selon l'une des revendications précédentes, dans lequel le support de code (10)

• est en forme de disque,
• peut tourner autour d'un axe (55), un angle de rotation autour de l'axe (55) pouvant être détecté par l'élément de détection (30), et/ou
• est doté de moyens (18, 18') permettant de dévier les rayons, notamment sous la forme de miroirs et/ou de guides d'ondes, afin de guider vers l'élément de détection (30) le rayonnement émis par la source de rayonnement (20), notamment par réflexion,

le code de position (11) étant notamment disposé essentiellement sur toute la surface du support de code (10) orientée vers l'élément support (40).

**12.** Dispositif optoélectronique de mesure de position selon l'une des revendications précédentes, l'élément support (40) étant constitué de plusieurs couches (41, 42, 43), notamment collées.

*Fig. 1a*

*Fig. 1b*

Fig. 1c

Fig. 2a

Fig. 2b

Fig. 2c

*Fig. 3a*

*Fig. 3b*

*Fig. 3c*

*Fig. 4a*

*Fig. 4b*

*Fig. 4c*

Fig. 5a

Fig. 5b

Fig. 5c

45

63

30

60

*Fig. 6a*

41

42

43

63    75    30    45

*Fig. 6b*

41

42

43

63    73    30    45

*Fig. 6c*

Fig. 7a

Fig. 7b

**IN DER BESCHREIBUNG AUFGEFÜHRTE DOKUMENTE**

**In der Beschreibung aufgeführte Patentdokumente**

- CH 658514 A5
- US 2004173737 A